# EUROPEAN PATENT SPECIFICATION

(11) **EP 3 197 658 B1**
(45) Date of publication and mention of the grant of the patent: **28.07.2021**
(21) Application number: 15775656.0
(22) Date of filing: 23.09.2015
(51) Int. Cl.: B29C 70/68, B29C 44/08, B29C 70/66

(54) **METHOD FOR MANUFACTURING AN OBJECT**
VERFAHREN ZUR HERSTELLUNG EINES OBJEKTS
PROCÉDÉ DE FABRICATION D'UN OBJET

(30) Priority: 24.09.2014 IT TV20140141
(43) Date of publication of application: 02.08.2017
(73) Proprietor: Conte, Stefano, 31038 Paese (TV) (IT)
(72) Inventor: Conte, Stefano, 31038 Paese (TV) (IT)
(74) Representative: De Bortoli, Eros
(86) International application number: PCT/EP2015/071901
(87) International publication number: WO 2016/046279

(56) References cited:
- AU-B2- 746 316
- JP-A- S55 118 838
- JP-A- S61 283 633
- US-A- 4 671 910
- US-A1- 2002 105 105
- US-A1- 2005 080 151
- US-A1- 2011 193 254
- US-B1- 6 525 125

## Description

The present invention refers to a method for manufacturing an object.

In particular, the present invention refers to a method for manufacturing an object, at least partially produced in polymer or composite material, by means of hot forming.

The method, according to the invention, is suitable for manufacturing any kind of objects at least partially made of polymer or composite materials.

The method, according to the invention, is particularly suitable for manufacturing sports items at least partially made of polymer or composite materials.

It is known that in the industrial production of objects made of polymer or composite materials, hot forming techniques are often used, for example injection forming, compression forming, BMC (Bulk Moulding Compound) forming, SMC (Sheet Moulding Compound) forming, RTM (Resin Transfer Moulding) forming, forming by infusion and similar.

The manufacture of objects made of polymeric or composite material by means of hot forming is particularly advantageous if the objects to be produced have a relatively simple shape, for example tubular or with large surfaces.

Unfortunately, it becomes particularly laborious and costly if the objects to be produced have a complex shape, for example non-tubular or closed or with undercuts or inserts.

The adoption of hot forming techniques for manufacturing objects with complex shapes made of polymer or composite material may furthermore lead to unsatisfactory results.

Often, the resulting end product has multiple joint lines that can negatively affect its structural integrity or limit its use and performance.

**Patent** AU246316B2 **discloses a known method for manufacturing a sports item.**

The main aim of the present invention is to provide a method for manufacturing an object which solves the drawbacks of the known art.

A further object of the present invention is to provide a manufacturing method that is particularly suitable to the production of objects made of polymer and/or composite material, by means of hot forming.

A further object of the present invention is to provide a manufacturing method that allows simple, rapid and inexpensive industrial production of objects with a complex shape.

A further object of the present invention is to provide a manufacturing method that allows objects to be obtained with a high level of robustness and structural integrity.

A further object of the present invention is to provide a manufacturing method that is easy to implement at industrial level, at competitive costs.

This aim and these objects, in addition to further objects that will appear evident from the following description and from the accompanying drawings, are achieved, according to the invention, by a method for manufacturing an object, according to claim 1, proposed below.

The method, according to the invention, comprises a step of inserting in a first forming container a quantity of a first material comprising particles having a shell made of thermoplastic polymer material, which encapsulates a fluid that makes said particles expansible.

The method, according to the invention, comprises a step of heating the above-mentioned first forming container to a first temperature. This causes a first expansion of the particles and a mechanical bonding between the particles.

The method, according to the invention, comprises a step of cooling the above-mentioned first forming container.

Following the heating and cooling steps of said first forming container, a first semi-finished product is obtained, in the solid state, having geometrical shape at least partially defined by said first forming container.

Such a first semi-finished product has a solid structure at least partially formed by the expanded and bonded particles of said first material, which are solidified (i.e. hardened).

In said first semi-finished product, the expanded and bonded particles of said first material have a residual expansion capacity, so that they can further expand upon heating.

According to the invention, the method comprises a step of covering, at least partially, the first semi-finished product, thus obtained, with at least a second material.

According to an aspect of the invention, the second material can be a composite material, preferably comprising a carbon fibre and/or glass fibre.

According to an aspect of the invention, the second material can be a thermosetting polymer material.

According to an aspect of the invention, the second material can be a thermoplastic polymer material.

The method, according to the invention, comprises a step of inserting in a second forming container the first semi-finished product, which is at least partially covered with the second material.

The method, according to the invention, comprises a step of heating the second forming container to a second temperature, higher than said first temperature, so as to cause a further expansion of the expanded and bonded particles of said first material.

The further expansion of the expanded and bonded particles of said first material is obtained by exploiting the residual expansion capacity of said expanded and bonded particles.

In this way, an expansion of the volume of said first semi-finished product is obtained in such a way that said first semi-finished product presses at least partially said second material against one or more walls of said second forming container;

The method, according to the invention, comprises a step of cooling the above-mentioned second forming container.

Following the heating and cooling of said second forming container, a second semi-finished product is obtained, in the solid state, having a geometrical shape at least partially defined by said second forming container.

The second semi-finished product has a solid structure at least partially formed by at least a solidified layer of said second material.

According to an aspect of the invention, if the second material is made of a composite material or a thermosetting polymer material, the second forming container can be heated to a second temperature such as to cause hardening of the second material.

According to an aspect of the invention, if the second material consists of a thermoplastic polymer material, the second forming container can be heated to a second temperature such as to cause a transition to a softening phase of said second material.

According to an aspect of the invention, the second forming container can be heated to a second temperature such as to cause the break-up of the shells of at least part of the particles of said first material.

According to an aspect of the invention, the method comprises a step of removing from the internal volume of the second semi-finished product a solid structure formed following the break-up of the shells of part of the particles of said first material.

According to an aspect of the invention, the removal of said solid structure can advantageously be performed by extracting said solid structure through an opening of the second semi-finished product.

According to an aspect of the invention, the method comprises the step of inserting a first pre-formed product in the first forming container, before heating first forming container. According to an aspect of the invention, the method comprises the step of inserting a second pre-formed product in the second forming container, before heating said second forming container.

According to an aspect of the invention, the method comprises the step of inserting at least a third material into said second container before the insertion of said first semi-finished product into said second container.

According to an aspect of the invention, the method comprises the step of inserting at least a fourth material into said second container after the insertion of said first semi-finished product into said second container.

According to an aspect of the invention, the method comprises the step of covering at least partially said first semi-finished product, which is at least partially covered with said second material, by means of at least a fifth material before the insertion of said first semi-finished product into said second container.

The method according to the invention is particularly suitable for the manufacturing of sports items.

More particularly, the method according to the invention is particularly suitable for the manufacturing of archery bow structures, namely archery riser structures,

According to a further aspect, the present invention relates to a method for manufacturing a sports item according to the following claim 16.

According to a further aspect, the present invention relates to a method for manufacturing an archery bow structure or archery riser structure according to claim 17.

According to a further aspect, the present disclosure relates to a sports item.

According to a further aspect, the present disclosure relates to an archery bow structure.

According to a further aspect, the present disclosure relates to an archery riser structure.

Further characteristics and advantages of the method, according to the invention, can be better understood by referring to the description given below and the attached figures, provided for purely illustrative non-limiting purposes, in which:
- figures 1-7, 11 illustrate schematically some steps of the method, according to the invention, in one embodiment;
- figures 8-10, 12 illustrate schematically some steps of the method, according to the invention, in a further embodiment;
- figures 13-15 illustrate schematically some steps of the method, according to the invention, in a further embodiment;
- figures 16-18 illustrate schematically some steps of the method, according to the invention, in a further embodiment;
- figures 19-21 illustrate schematically some steps of the method, according to the invention, in a further embodiment;
- figures 21-24 illustrate schematically some steps of the method, according to the invention, in a further embodiment;
- figures 25-27 illustrate schematically some steps of the method, according to the invention, in a further embodiment;
- figure 28 illustrates schematically a sport item, in this case an archery bow structure, which is manufactured according to the method of the present invention.

With reference to the cited figures, the present invention refers to a method for manufacturing an object.

In particular, the present invention refers to a method for manufacturing, by hot forming, an object made, at least partially, of polymer or composite material.

The method, according to the invention, can be used for producing objects of any type, shape or dimension.

The manufacturing method, according to the invention, comprises a first step of inserting in a first forming container 11 a quantity of a first material 100 which comprises particles 200 having an expanded shell 201 made of thermoplastic polymer material.

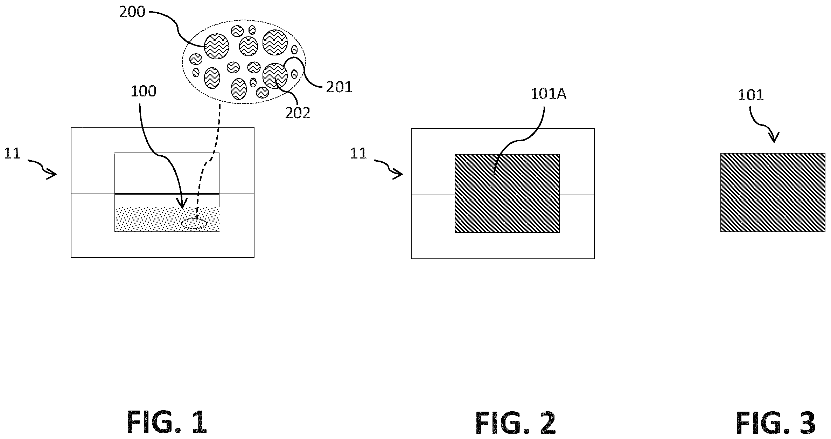

The shell 201 of the particles 200 encapsulates a fluid 202 which makes the above-mentioned particles expansible, with respect to a rest condition (figure 1).

Preferably, the fluid 202, encapsulated in the particles 200, is a gas.

Preferably, the fluid 202, encapsulated in the particles 200, is a hydrocarbon, advantageously with low boiling point.

Preferably, the thermoplastic polymer material of the shells 201 of the particles 200 is selected from a group comprising polyester resin, silicone resin, polyvinyl alcohol, polyvinyl chloride, polypropylene, polystyrene, polyacrylonitrile, polyamide, acrylonitrile butadiene styrene, polyethylene, thermoplastic polyurethane, polyphenylene sulphide, polybutylene terephthalate, polyether ether ketone and combinations thereof.

Preferably, the thermoplastic polymer material of the shells 201 of the particles 200 comprises polyacrylonitrile.

Preferably the first material 100 is a dry or powder material.

Preferably, the first material 100 is a material marketed by Akzo Nobel N.V. under the trade name Expancel®.

The manufacturing method, according to the invention, comprises a step of heating the first container 11 up to a first temperature T1 so as to cause a first expansion of the particles 200 of the first material 100 and a mechanical bonding between the particles 200 (in particular between the shells 201 of these latter).

The container 11 is kept at the temperature T1 for a heating time which can be selected according to the characteristics of the first material 100.

The first temperature T1 is higher than an expansion temperature TE of the first material 100. The heating of the particles 200 makes the thermoplastic shells 201 of the particles soft and at the same time causes an increase in the pressure exerted by the encapsulated fluid 202, due to the natural expansion of the fluid.

Once the expansion temperature TE has been exceeded, the pressure exercised by the fluid 202 deforms the shells 201 which are in a soft state.

The particles 200 expand, with respect to a rest condition. The soft state of the shell 201 allows effective mechanical bonding between adjacent particles, which join with one another due to the pressure exerted by the fluid 202 encapsulated inside.

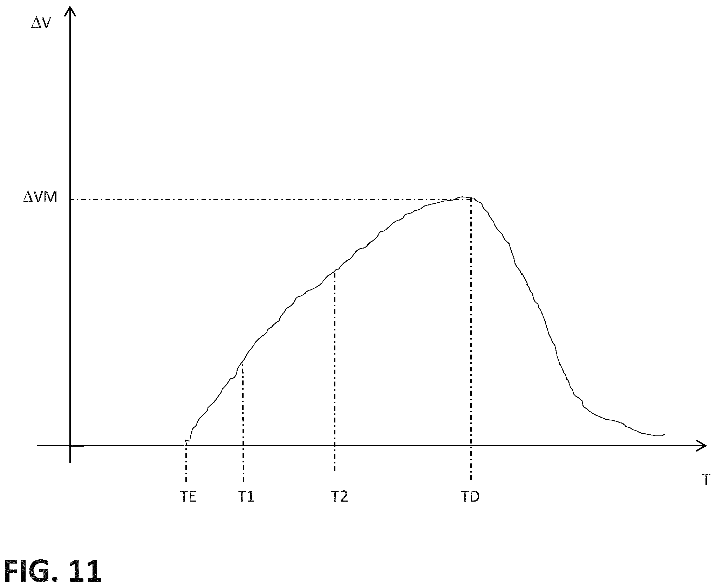

Figures 11-12 schematically illustrate some curves that show the pattern of the volume variation (ΔV) of the first material 100 according to the temperature (T).

The volume of the first material 100 progressively increases at temperatures between the expansion temperature TE and a degradation temperature TD (expansion phase).

At the degradation temperature TD, the first material 100 reaches the maximum volume variation ΔVM.

For temperatures higher than the degradation temperature TD, the particles 200 of the first material 100 break up progressively, as their shells 201 explode due to the excessive pressure exerted by the fluid 202 encapsulated inside.

This causes a rapid reduction in volume of the first material 100 at temperatures higher than the temperature TD (collapse phase).

The expansion of the particles 200 and the mechanical bonding between them leads to the formation of a solid structure in expanded thermoplastic polymer material (the material of the shells 201), when the first material 100 exceeds the expansion temperature TE.

Said solid structure increases its volume with the temperature, during the above-mentioned expansion phase, and reaches maximum volumetric expansion at the degradation temperature TD.

If brought to temperatures higher than the degradation temperature TD, said solid structure rapidly collapses, remarkably reducing its volume.

The expansion temperature TE and the degradation temperature TD of the first material 100 depend on the type of material used. For example, the expansion temperature TE of the first material 100 can be in the range 80-85°C while the degradation temperature TD can be in the range 160-170°C.

Heating of the first material 100 inserted in the container 11 to the temperature T1 causes an increase of the volume of the first material 100, preferably until it occupies the entire inner volume of the forming container (figure 2).

During its expansion, a structure 101A made of expanded thermoplastic polymer material is formed, which comprises by the expanded and bonded particles 200.

Said structure of expanded polymeric material adheres, at least partially, to the walls of the container 11 and assumes, at least partially, the geometric shape defined by the latter.

The manufacturing method, according to the invention, comprises a step of cooling the first forming container 11 to a temperature below the temperature T1, preferably below the expansion temperature TE, e.g. to ambient temperature.

During its cooling, the structure 101A of expanded polymeric material solidifies (i.e. it becomes hardened) and takes the geometric shape defined by the container 11.

Following the heating and cooling of the container 11, a first semi-finished product 101 is obtained, in the solid state, having a geometric shape at least partially defined by the forming container.

The semi-finished product 101 has a solid structure.

Said solid structure is at least partially formed by the solidified expanded and bonded particles 200 of the first material 100, which form the expanded thermoplastic polymer material 101A described above.

With reference to figure 11, the temperature T1 is advantageously selected so as to be higher than the expansion temperature TE and lower than the degradation temperature TD of the first material 100.

In this way, after the heating and cooling steps in the container 11, the particles 200 of the first material 100 conserve a residual expansion capacity, in the case of further heating to temperatures higher than the first temperature T1.

The semi-finished product 101 is thus able to further expand its volume if brought to temperatures higher than the first temperature T1.

The forming container 11 can be a mould of traditional type, open or closed, suitable for a hot forming process.

The forming container 11 can be a hot forming mould made of metal, silicone or thermosetting or thermoplastic polymer material having, respectively, a relatively high reaction temperature or softening temperature with respect to the process temperatures of the present invention.

In general, however, the forming container 11 can be any container able to contain the first material 100 and impress a form on the material contained.

Preferably, if the container 11 is a traditional hot forming mould, the manufacturing method, according to the invention, comprises a step of extracting the semi-finished product 101 from the container 11 (figure 3).

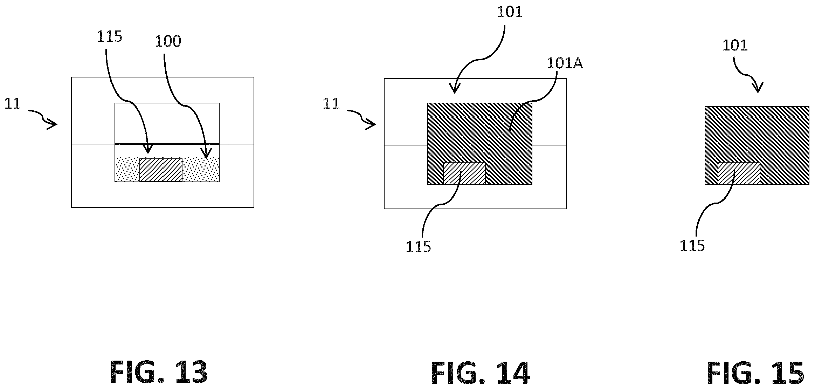

With reference to figures 13-15, the manufacturing method, according to the invention, comprises the step of inserting at least a first pre-formed product 115 into the forming container 11, before proceeding with heating of the latter.

The pre-formed product 115 can be of any shape and material, according to requirements. Said solution is particularly useful when it is desirable to obtain a semi-finished product 101 having a core, an insert or, more generally, any portion made of material different from the thermoplastic polymer material of the shell 201 of the particles 200.

In this case, the solid structure of the semi-finished product 101 is not entirely formed of the expanded thermoplastic polymer material 101A, as in the example illustrated in figure 3 but also by the pre-formed product 115 (figure 15).

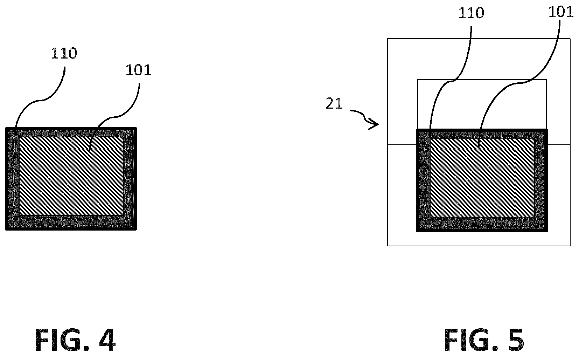

The manufacturing method, according to the invention, comprises a step of covering, at least partially, the first semi-finished product 101 with one or more layers of at least a second material 110 (figure 4).

According to an aspect of the invention, the second material 110 is a composite material. Said composite material can comprise carbon fibre, glass fibre, aramid fibre, metallic fibre, natural fibre and/or ceramic fibre.

Preferably, said composite material comprises carbon fibre and/or glass fibre.

According to an aspect of the invention, the second material 110 is a thermosetting polymer material.

Preferably, said thermosetting polymer material is selected from a group comprising thermosetting polyurethane, epoxy resin, polyphenol, polyimide, polydicyclopentadiene, polytetrafluoroethylene and combinations thereof.

According to an aspect of the invention, the second material 110 is a thermoplastic polymer material.

Preferably, said thermoplastic polymer material is selected from a group comprising polyester resin, silicone resin, polyvinyl alcohol, polyvinyl chloride, polypropylene, polystyrene, polyacrylonitrile, polyamide, acrylonitrile butadiene styrene, polyethylene, thermoplastic polyurethane, polyphenylene sulphide, polybutylene terephthalate, polyether ether ketone and combinations thereof.

According to further embodiments of the invention, the second material 110 could be a colloid, a gel or an amalgam.

The second material 110 can be applied following known procedures, which can be selected according to the characteristics of the material used and/or the form of the semi-finished product 101.

For example, if it is a composite material comprising carbon fibre and/or glass fibre, the second material 110 can be applied by wrapping one or more prepreg sheets of composite material on the surface of the semi-finished product 101.

If it is a thermosetting or thermoplastic polymer material, the second material 110 can be applied by means of spraying, immersion or wrapping of a film on the surface of the semi-finished product 101.

The manufacturing method, according to the invention, comprises a step of inserting the semi-finished product 101, which is at least partially covered with the second material 110, into a second forming container 21 (figure 5).

The manufacturing method, according to the invention, comprises a step of heating the container 21 to a second temperature T2 such as to cause a second further expansion of the particles 200 of the first material 100.

The container 21 is maintained at the temperature T2 for a heating time which can be selected according to the characteristics of the first material 100 and the second material 110.

With reference to figure 11, the temperature T2 is advantageously selected so as to be higher than the temperature T1 (and obviously the temperature TE).

The heating in the forming container 21 causes a further expansion of the bonded and expanded particles 200 of the first material 100 that forms the solid structure of the first semi-finished product 101.

To this aim, the residual expansion capacity of the bonded and expanded particles 200, which is conserved after the heating step in the forming container 11, is advantageously exploited. The expanded thermoplastic polymer material 101A of the semi-finished product 101 increases its volume and, at the same time, it becomes soft and can therefore be further deformed.

The semi-finished product 101, which is covered with the second material 110, thus expands its volume due to the further expansion of the bonded and expanded particles 200.

As its volume expands, the first semi-finished product 101 presses at least partially the second material 110 against one or more walls of the container 21.

The one or more layers of second material 110 are therefore shaped, at least partially, according to the form defined by the walls of the container 21.

The manufacturing method, according to the invention, comprises a step of cooling the container 21 to a temperature lower than the temperature T2, preferably below the expansion temperature TE, e.g. to ambient temperature.

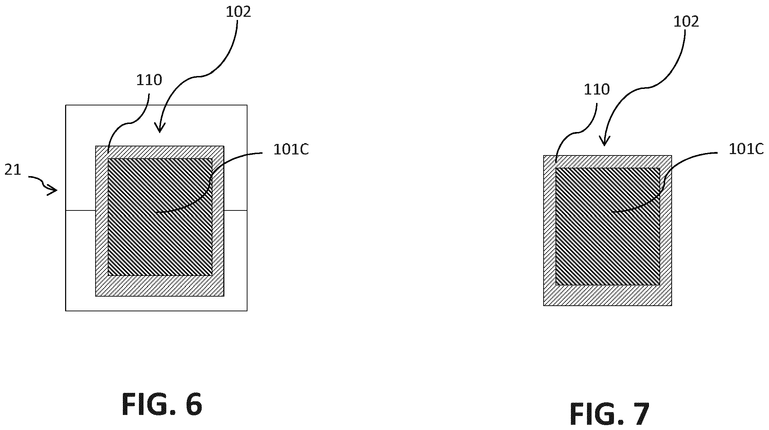

Following the heating and cooling of the container 21, a second semi-finished product 102 is obtained, in the solid state, having a geometric shape at least partially defined by the forming container (figure 6).

The semi-finished product 102 has a solid structure, which is at least partially formed by one or more solidified (i.e. hardened) layers of second material 110.

As it will be more apparent in the following, the solid structure of the semi-finished product 102 may be formed also by the further expanded thermoplastic polymer material 101C of the semi-finished product 101, depending on the selected heating temperature T2.

The forming container 21 can be a traditional mould, open or closed, suitable for a hot forming process.

The forming container 21 can be a hot forming mould made of metallic material, silicone material or thermosetting or thermoplastic polymer material having, respectively, a relatively high reaction temperature or softening temperature with respect to the process temperatures of the present invention.

In general, however, the forming container 21 can be any container able to house the semi-finished product 101, covered with the second material 110, and give a shape to the material contained.

Preferably, above all if the container 21 is a traditional hot forming mould, the manufacturing method, according to the invention, comprises a step of extracting the semi-finished product 102 from the container 21 (figure 7).

The semi-finished product 102 can have different shape and dimensions with respect to the semi-finished product 101.

The forming containers 11, 21 can have a different shape and dimension from each other, according to requirements.

According to an aspect of the invention, if the second material 110 is a thermosetting or composite polymer material, the forming container 21 is heated to a temperature T2 such as to cause a hardening of the second material.

In this case, the temperature T2 is preferably higher than the reaction temperature (hardening or cross-linking) of the second material 110.

According to an aspect of the invention, if the second material 110 is a thermoplastic polymer material, the forming container 21 is heated to a temperature T2 such as to cause a transition of the second material to the softening phase.

In this case, the temperature T2 is preferably higher than the softening phase transition temperature of the thermoplastic polymer material.

When the second material 110 is subject to a transition to the softening phase (as it is heated to a temperature higher than the softening phase transition temperature), it reversibly passes from a hard state to a soft or molten state as the linking energy between the polymer chains is reduced. The second material can thus easily take the shape of the walls of a forming container.

According to the embodiment of the invention illustrated in figures 4-7, 11, the temperature T2 is lower than the degradation temperature TD of the first material 100, as illustrated in figure 11.

In this case, the semi-finished product 102 has a solid structure, which is at least partially formed also by the the further expanded and bonded particles 200 of the first material 100, which form the further expanded thermoplastic polymer material 101C.

In practice, in this case the semi-finished product 102 has a solid structure that is formed by the further expanded thermoplastic polymer material 101C of the first semi-finished product 101.

The further expanded and bonded particles 200 of the first material 100 conserves a residual expansion capacity, since the particles 200 have not yet reached the degradation temperature TD, although they have been subjected to successive expansions.

The further expanded thermoplastic polymer material 101C can thus further expand its volume if it is heated at a temperature higher than the temperature T2 (and obviously the temperature TE).

In principle, therefore, the semi-finished product 102 could be subjected to one or more further heating cycles, each at a progressively increasing temperature but always lower than the degradation temperature TD.

In this case, at each further heating cycle, the expanded and bonded particles 200 of the first material 100 would be subject to a further expansion in volume.

Before each further heating cycle, the semi-finished product 102 could be covered with further materials.

In each further heating cycle, the forming container 21 or further forming containers (not illustrated) could be used.

During each further heating cycle, the semi-finished product 102 could be further shaped according to the form defined by any further forming containers used.

It is obvious that if the second material 110 is a thermosetting or composite polymer material, the semi-finished product 102 could be subjected to one or more further heating cycles only if it is constantly maintained at temperatures lower than the reaction temperature of the second material.

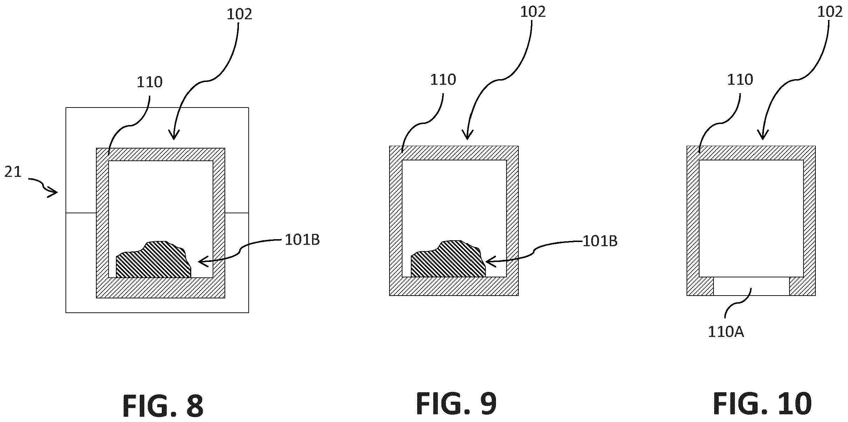

According to an aspect of the invention (figures 8-10, 21), the forming container 21 is heated to a second temperature T2 such as to cause the break-up of the shells 201 of at least part of the particles 200.

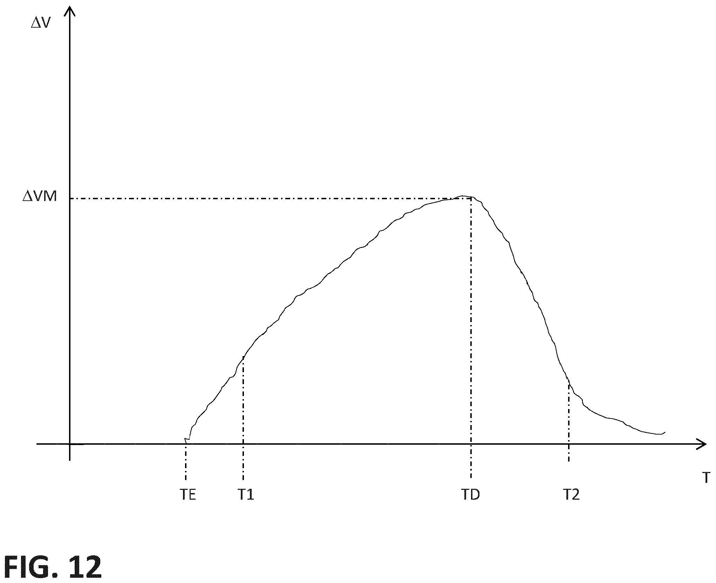

According to this embodiment of the manufacturing method, the temperature T2 is higher than the degradation temperature TD of the first material 100 (figure 12).

In this case, the semi-finished product 101, once inserted in the container 21 and heated to a temperature T2 > TD, reaches its maximum expansion in volume and then collapses rapidly and forms a collapsed solid structure 101B.

Said structure is the remainder of the semi-finished product 101.

The solid structure 101B can also have a volume much lower than the original volume of the semi-finished product 101.

During the expansion phase of the semi-finished product 101, however, the second material 110, adhering at least partially to the walls of the container 21, assumes, at least partially, the geometric shape defined by the latter (figure 8).

If the second material 110 is a thermosetting or composite polymer material, the temperature TD is preferably higher than the reaction temperature (hardening or cross-linking) of the second material 110.

If the second material 110 is a thermoplastic polymer material, the temperature TD is preferably higher than the softening temperature of the second material 110.

Following the heating and cooling of the container 21, a second semi-finished product 102 is therefore obtained, in the solid state, comprising the solidified layers of second material 110 and, at an inner volume, the collapsed solid structure 101B (figure 9).

According to this embodiment, the manufacturing method, according to the invention, comprises the step of removing the collapsed solid structure 101B from the second semi-finished product 102.

The removal of the collapsed solid structure 101B can be carried out by extracting the collapsed solid structure 101B from the semi-finished product 102, advantageously through a dedicated opening 110A in a wall of the semi-finished product 102.

The opening 110A can be defined by the shape of the semi-finished product 102 or be purposely produced by means of work processes of known type.

As alternative, the removal of the collapsed solid structure 101B can be carried out by means of suitable chemical agents capable of dissolving the collapsed solid structure 101B. Said chemical agents may be introduced in the internal volume of the second semi-finished product 102 by means of a dedicated opening 110A in a wall of the semi-finished product 102.

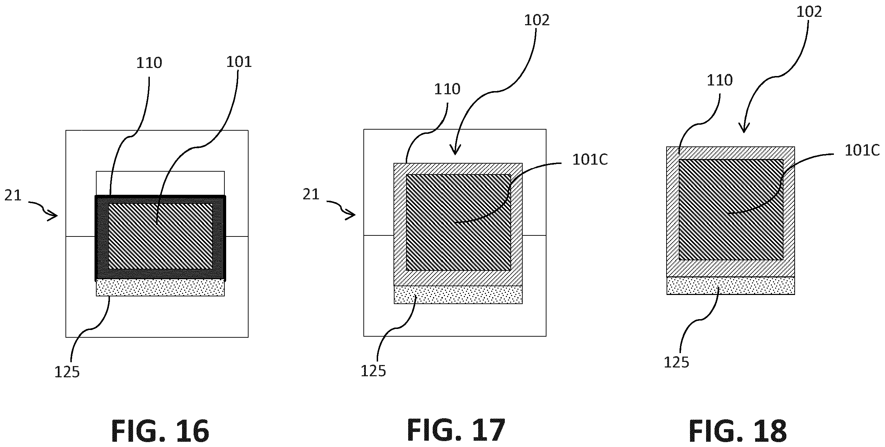

With reference to figures 16-18, the manufacturing method, according to the invention, comprises the step of inserting at least a second pre-formed product 125 into the container 21, before proceeding with heating of the latter.

The pre-formed product 125 can be of any shape and material, according to requirements.

Said solution is particularly useful when it is desirable to obtain a semi-finished product 102 having an insert or, more generally, any portion made of material different from the thermoplastic polymer material of the shell 201 of the particles 200 and/or from the second material 110.

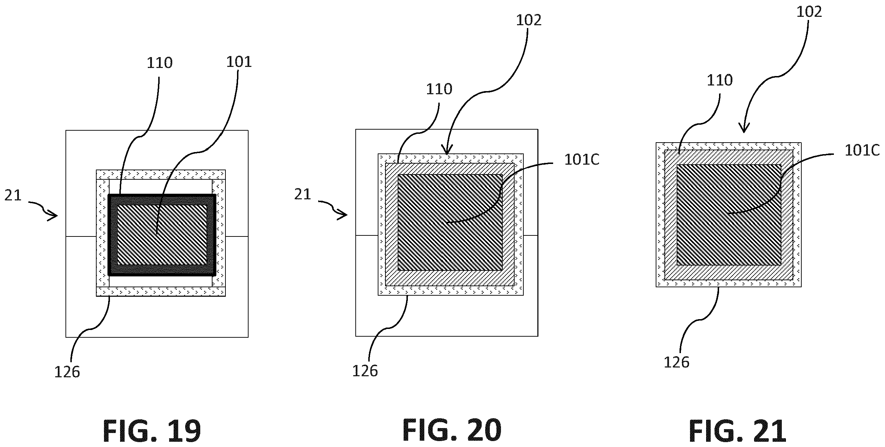

With reference to figures 19-21, the manufacturing method, according to the invention, comprises the step of inserting one or more layers of at least a third material 126 into the container 21, before the insertion of the semi-finished product 101 into the container 21. Preferably, the layers of third material 126 are inserted into the container 21 in such a way to cover at least partially one or more internal walls of the container 21.

As an example the third material 126 may comprise one or more layers of thermoplastic material that are applied to one or more internal walls of the container 21 to form a covering film that is applied on the second material 110 during the heating of the semi-finished product 101 in the container 21.

As mentioned above, when the container 21 is heated at a suitable temperature T2, the semi-finished product 101, which is at least partially covered with the second material 110, expands due to the further expansion of the bonded and expanded particles 200 of the first material 100.

By expanding its volume, the first semi-finished product 101 presses at least partially the second material 110 against one or more walls of the container 21, which are at least partially covered with the layers of third material 126.

In this way, the layers of second material 110 and the layers of third material 126 bond together and take the shape defined by the walls of the container 21.

Also in this case, after the heating and cooling of the container 21, a second semi-finished product 102 is obtained.

The semi-finished product 102 has a solid structure, which is at least partially formed by one or more solidified layers of second material 110 and by one or more solidified (i.e. hardened) layers of third material 126, which are bonded to the layers of second material 110.

In the semi-finished product 102, the layers of third material 126 are positioned externally with respect to the layers of second material 110.

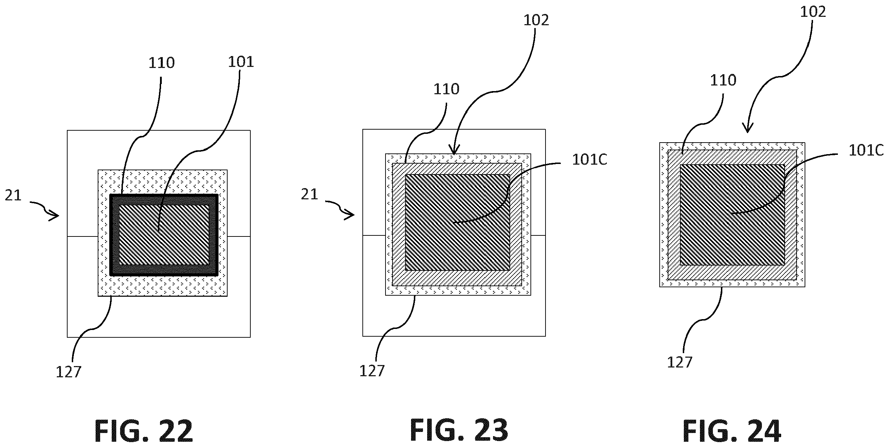

With reference to figures 22-24, the manufacturing method, according to the invention, comprises the step of inserting at least a fourth material 127 into the container 21, after the insertion of the semi-finished product 101 into the container 21.

Preferably, when it is inserted into the container 21, the fourth material 127 covers at least partially the semi-finished product 101, which is at least partially covered with the second material 110.

In this way, the fourth material 127 at least partially covers the second material 110.

As an example the fourth material 127 may comprise thermoplastic material that is injected into the container 21 to form one or more over-injected layers covering the second material 110 during the heating of the semi-finished product 101 in the container 21.

Preferably, the fourth material 127 is injected into the container 21 before or during the heating of this latter.

As mentioned above, when the container 21 is heated at a suitable temperature T2, the semi-finished product 101, which is at least partially covered with the second material 110, expands due to the further expansion of the bonded and expanded particles 200 of the first material 100.

By expanding its volume, the first semi-finished product 101 presses at least partially the second material 110 and the fourth material 127 against one or more walls of the container 21. In this way, the second material 110 and the fourth material 127 bond together and take the shape defined by the walls of the container 21.

Also in this case, after the heating and cooling of the container 21, a second semi-finished product 102 is obtained.

The semi-finished product 102 has a solid structure, which is at least partially formed by one or more solidified layers of the second material 110 and by one or more solidified (i.e. hardened) layers of the fourth material 127, which are bonded with the layers of second material 110.

In the semi-finished product 102, the layers of fourth material 127 are positioned externally with respect to the layers of second material 110.

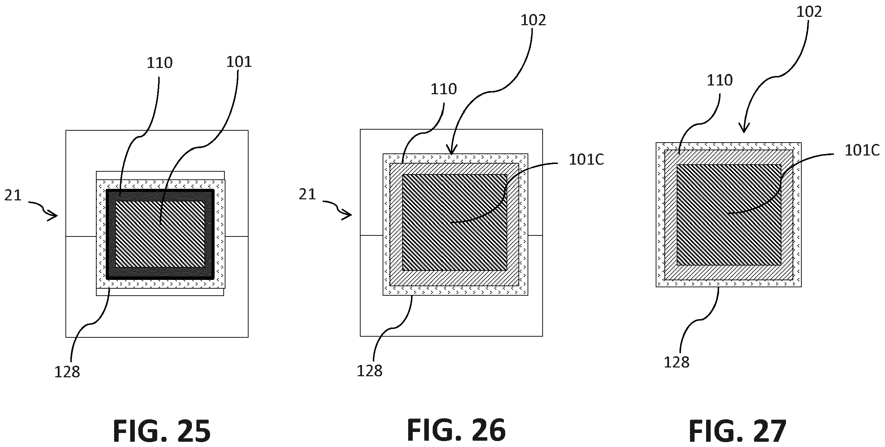

With reference to figures 25-27, the manufacturing method, according to the invention, comprises the step of covering at least partially the semi-finished product 101, which at least partially covered by the second material 110, by means of at least a fifth material 128.

The covering of the semi-finished product 101 with the fifth material 128 occurs before inserting the semi-finished product 101, which is at least partially covered with the second material 110, into the container 21.

As an example the fifth material 128 may comprise one or more layers of thermoplastic material that applied to the semi-finished product 101, which is already covered by the second material 110, in order to form a covering film applied on the second material 110 before the heating of the semi-finished product 101 in the container 21.

The fifth material 128 is applied externally to the second material 110 by means of techniques similar to those described for the layers of second material 110.

As mentioned above, when the container 21 is heated at a suitable temperature T2, the semi-finished product 101, which is covered with the second material 110 and with the fifth material 128, expands due to the further expansion of the bonded and expanded particles 200 of the first material 100.

By expanding its volume, the first semi-finished product 101 presses at least partially the second material 110 and the fifth material 128 against one or more walls of the container 21. In this way, the second material 110 and the fifth material 128 bond together and take the shape defined by the walls of the container 21.

Also in this case, after the heating and cooling of the container 21, a second semi-finished product 102 is obtained.

The semi-finished product 102 has a solid structure, which is at least partially formed by one or more solidified layers of the second material 110 and by one or solidified (i.e. hardened) layers of fifth material 128, which are bonded to the layers of second material 110.

In the semi-finished product 102, the layers of fifth material 128 are positioned externally with respect to the layers of second material 110.

Preferably, the mentioned third, fourth and/or fifth materials 126, 127, 128 are thermoplastic polymer materials.

Preferably, said thermoplastic polymer materials are selected from a group comprising polyester resin, silicone resin, polyvinyl alcohol, polyvinyl chloride, polypropylene, polystyrene, polyacrylonitrile, polyamide, acrylonitrile butadiene styrene, polyethylene, thermoplastic polyurethane, polyphenylene sulphide, polybutylene terephthalate, polyether ether ketone and combinations thereof.

The skilled person would certainly understand that further embodiments of method of the invention are possible, which comprise suitable combinations of the steps described above with reference to figures 19-27.

The above described solutions of figures 19-27 are particularly useful when it is desirable to obtain external decorative layers in the semi-finished product 102 without the need of further processing, such as painting or other steps for applying decorations.

The above described solutions allow easily obtaining external grip surfaces to improve handling of an object.

The above described solutions allow filling with a thermo-plastic material small or complex parts of an object.

The above described solutions allow easily obtaining small or complex geometric parts in plastic material, which, for example, may be suitable for mechanical connection with screws, pins, rivets and the like, thereby avoiding gluing, over-injection or machining of parts.

As mentioned above, the method according to the invention is particularly suitable for the manufacturing of sports items.

More particularly, the method according to the invention is particularly suitable for the manufacturing of archery bow structures, namely archery riser structures,

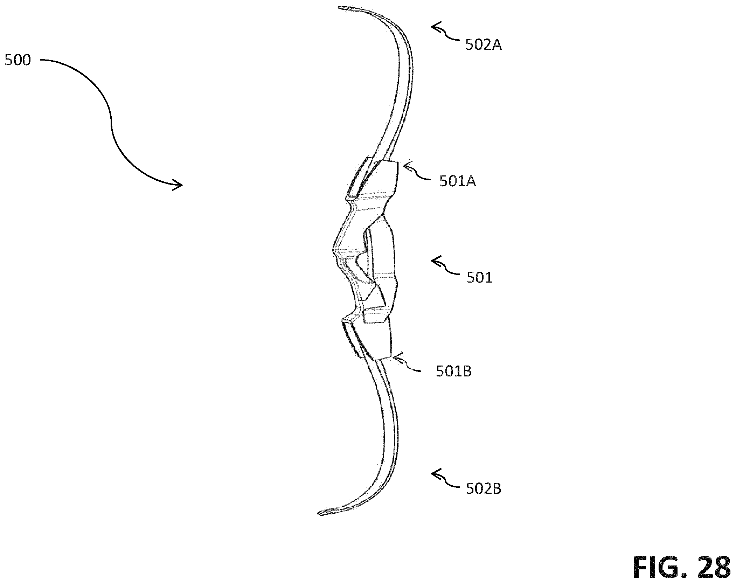

Figure 28 schematically illustrates an example of archery bow structure 500, the manufacturing process of which includes the method of the invention.

The archery bow structure 500 comprises a riser structure 501 and a pair of limb structures 502A, 502B.

The riser structure 501 has first and second ends 501, 501B, which are opposite one to another.

At the ends 501A, 501B, the riser structure 501 is mechanically connected with the limb structures 502A, 502B, respectively.

The method for manufacturing an object according to the present invention may be advantageously adopted for manufacturing the riser structure 501.

In this case, the riser structure 501 may constitute the semi-finished product 102 described above.

The riser structure 501 obtained by carrying out the method of the invention may be ready for assembly with the limb structures 502A, 502B without the need of further processing. However, in some cases, further processing of the raiser structure 501 (such as painting, decorating or the like) may be carried out after the steps of the method the invention.

The manufacturing method, according to the invention, has considerable advantages with respect to the known art.

The manufacturing method, according to the invention, allows objects made of thermoplastic or composite polymer material to be obtained, rapidly, simply and inexpensively, by means of successive hot forming phases.

The manufacturing method, according to the invention, is furthermore particularly suitable for producing objects made of materials with a high rigidity/density ratio, such as composite materials.

The semi-finished product 101 can be advantageously used as a template for application of the composite material, thus allowing optimal arrangement of the layers of second material 110. This significantly reduces the creation of folds in the composite material after the cross-linking process of the same.

The manufacturing method, according to the invention, is particularly suitable for producing objects with complex shapes, for example closed structures provided with inner reinforcement ribbing and/or undercuts and/or inserts.

The manufacturing method, according to the invention, is particularly suitable for producing objects with external decorative layers.

The manufacturing method, according to the invention, allows optimal regulation of the internal pressure of the forming container, during the hot forming process. This significantly reduces the formation of burrs and ensures optimal structural integrity and resistance of the object produced.

The manufacturing method, according to the invention, can be easily implemented at industrial level, with considerable advantages in terms of limitation of production times and costs.

## Claims

1. Method for manufacturing an object comprising the following steps:
- inserting in a first forming container (11) a quantity of a first material (100) comprising particles (200) having a shell (201) made of thermoplastic material, which encapsulates a fluid (202) that makes said particles expansible;
- heating said first forming container (11) to a first temperature (T1) such that to cause an expansion of the particles (200) of said first material and a mechanic bonding among said particles;
- cooling said first forming container (11), a first semi-finished product (101) having geometrical shape at least partially defined by said first forming container being obtained following the heating and cooling of said first forming container, said first semi-finished product having a solid structure at least partially formed by solidified expanded and bonded particles (200) of said first material, the expanded and bonded particles (200) of said first material having a residual expansion capacity;
further comprising the following steps:
- covering, at least partially, said first semi-finished product with at least a second material (110);
- inserting said first semi-finished product (101) in a second forming container (12), said first semi-finished product being at least partially covered with said second material (110);
- heating said second forming container (12) to a second temperature (T2) higher than said first temperature (T1) such that to cause a further expansion of the expanded and bonded particles (200) of said first material by exploiting the residual expansion capacity of said expanded and bonded particles and a consequent expansion of the volume of said first semi-finished product (101) so that said first semi-finished product presses at least partially said second material against one or more walls of said second forming container;
- cooling said second forming container (12), a second semi-finished product (102) having geometrical shape at least partially defined by said second forming container being obtained following the heating and cooling of said second forming container, said second semi-finished product having a solid structure at least partially formed by at least a solidified layer of said second material.

2. Method, according to claim 1, **characterized in that** said second material (110) is a composite material.

3. Method, according to claim 2, **characterized in that** said composite material comprises carbon fiber or glass fiber.

4. Method, according to claim 1, **characterized in that** said second material (110) is a thermosetting material.

5. Method, according to claim 1, **characterized in that** said second material (110) is a thermoplastic material.

6. Method, according to one or more of the claims from 1 to 4, **characterized in that** said second forming container (12) is heated to a second temperature (T2) such that to cause a hardening of said second material (110).

7. Method, according to claim 5, **characterized in that** said second forming container (12) is heated to a second temperature (T2) such that to cause a transition to a softening phase of said second material (110).

8. Method, according to one or more of the previous claims, **characterized in that** said second forming container (12) is heated to a second temperature (T2) such that to cause a breaking up of the shells (201) of at least part of the particles (200) of said first material.

9. Method, according to claim 8, **characterized in that** it comprises the step of removing a collapsed solid structure (101B), which is formed following the breaking up the shells (201) of at least part of the particles (200) of said first material, from said second semi-finished product (102).

10. Method, according to claim 9, **characterized in that** it comprises the step of removing said collapsed solid structure (101B) comprises the step of extracting said collapsed solid structure through a dedicated opening (110A) of said second semi-finished product.

11. Method, according to one or more of the previous claims, **characterized in that** it comprises the step of inserting a first pre-formed product (115) in said first forming container before heating said first forming container.

12. Method, according to one or more of the previous claims, **characterized in that** it comprises the step of inserting a second pre-formed product (125) in said second forming container before heating said second forming container.

13. Method, according to one or more of the previous claims, **characterized in that** it comprises the step of inserting at least a third material (126) into said second container (21) before the insertion of said first semi-finished product (101) into said second container.

14. Method, according to one or more of the previous claims, **characterized in that** it comprises the step of inserting at least a fourth material (127) into said second container (21) after the insertion of said first semi-finished product (101) into said second container.

15. Method, according to one or more of the previous claims, **characterized in that** it comprises the steps of covering at least partially said first semi-finished product (101), which is at least partially covered with said second material (110), by means of at least a fifth material (128) before the insertion of said first semi-finished product into said second container.

16. A method for manufacturing a sports item (500, 501) **characterised in that** it comprises a method according to one or more of the previous claims.

17. A method, according to claim 16, **characterised in that** it is a method for manufacturing an archery bow structure (500) or an archery riser structure (501).

## Patentansprüche

1. Verfahren zum Herstellen eines Objekts, aufweisend die folgenden Schritte:
- Einführen einer Menge eines ersten Materials (100) in einen ersten Formbehälter (11), das Partikel (200) mit einer Hülle (201) aufweist, die aus thermoplastischem Material besteht, das ein Fluid (202) einkapselt, das die Partikel expandierbar macht,
- Erwärmen des ersten Formbehälters (11) auf eine erste Temperatur (T1), so dass eine Expansion der Partikel (200) des ersten Materials und ein mechanisches Verbinden zwischen den Partikeln verursacht werden;
- Kühlen des ersten Formbehälters (11), wobei ein erstes halbfertiges Produkt (101) mit geometrischer Form, die zumindest teilweise durch den ersten Formbehälter definiert wird, nach dem Erwärmen und Kühlen des ersten Formbehälters erhalten wird, wobei das erste halbfertige Produkt eine feste Struktur aufweist, die zumindest teilweise durch verfestigte expandierte und verbundene Partikel (200) des ersten Materials gebildet wird, wobei die expandierten und verbundenen Partikel (200) des ersten Materials eine verbleibende Expansionskapazität aufweisen;
ferner aufweisend die folgenden Schritte:
- Bedecken, zumindest teilweise, des ersten halbfertigen Produkts mit zumindest einem zweiten Material (110);
- Einführen des ersten halbfertigen Produkts (101) in einen zweiten Formbehälter (12), wobei das erste halbfertige Produkt zumindest teilweise mit dem zweiten Material (110) bedeckt ist;
- Erwärmen des zweiten Formbehälters (12) auf eine zweite Temperatur (T2), die höher ist als die erste Temperatur (T1), so dass eine weitere Expansion der expandierten und verbundenen Partikel (200) des ersten Materials durch Ausnutzen der verbleibenden Expansionskapazität der expandierten und verbundenen Partikel und eine folgende Expansion des Volumens des ersten halbfertigen Produkts (101) verursacht wird, so dass das erste halbfertige Produkt zumindest teilweise das zweite Material gegen eine oder mehrere Wände des zweiten Formbehälters drückt;
- Kühlen des zweiten Formbehälters (12), wobei ein zweites halbfertiges Produkt (102) mit geometrischer Form, die zumindest teilweise durch den zweiten Formbehälter definiert ist, nach dem Erwärmen und Kühlen des zweiten Formbehälters erhalten wird, wobei das zweite halbfertige Produkt eine feste Struktur aufweist, die zumindest teilweise durch zumindest eine verfestigte Schicht des zweiten Materials gebildet wird.

2. Verfahren nach Anspruch 1, **dadurch gekennzeichnet, dass** das zweite Material (110) ein Verbundmaterial ist.

3. Verfahren nach Anspruch 2, **dadurch gekennzeichnet, dass** das Verbundmaterial Kohlefaser oder Glasfaser aufweist.

4. Verfahren nach Anspruch 1, **dadurch gekennzeichnet, dass** das zweite Material (110) ein thermoplastisches Material ist.

5. Verfahren nach Anspruch 1, **dadurch gekennzeichnet, dass** das zweite Material (110) ein thermoplastisches Material ist.

6. Verfahren nach einem oder mehreren der Ansprüche 1 bis 4, **dadurch gekennzeichnet, dass** der zweite Formbehälter (12) auf eine zweite Temperatur (T2) erwärmt wird, so dass ein Verhärten des zweiten Materials (110) verursacht wird.

7. Verfahren nach Anspruch 5, **dadurch gekennzeichnet, dass** der zweite Formbehälter (12) auf eine zweite Temperatur (T2) erwärmt wird, so dass ein Übergang auf eine Erweichungsphase des zweiten Materials (110) verursacht wird.

8. Verfahren nach einem oder mehreren der vorgenannten Ansprüche, **dadurch gekennzeichnet, dass** der zweite Formbehälter (12) auf eine zweite Temperatur (T2) erwärmt wird, so dass ein Aufbrechen der Hüllen (201) zumindest eines Teils der Partikel (200) des ersten Materials verursacht wird.

9. Verfahren nach Anspruch 8, **dadurch gekennzeichnet, dass** es den Schritt eines Entfernens einer kollabierten festen Struktur (101B) von dem zweiten halbfertigen Produkt (102) aufweist, die nach dem Aufbrechen der Hüllen (201) zumindest eines Teils der Partikel (200) des ersten Materials gebildet wird.

10. Verfahren nach Anspruch 9, **dadurch gekennzeichnet, dass** es den Schritt des Entfernens der kollabierten festen Struktur (101B) aufweist und den Schritt des Extrahierens der kollabierten festen Struktur durch eine zugeordnete Öffnung (110A) des zweiten halbfertigen Produkts aufweist.

11. Verfahren nach einem oder mehreren der vorgenannten Ansprüche, **dadurch gekennzeichnet, dass** es den Schritt des Einführens eines ersten vorgeformten Produkts (115) in den ersten Formbehälter vor dem Erwärmen des ersten Formbehälters aufweist.

12. Verfahren nach einem oder mehreren der vorgenannten Ansprüche, **dadurch gekennzeichnet, dass** es den Schritt des Einführens eines zweiten vorgeformten Produkts (125) in den zweiten Formbehälter vor dem Erwärmen des zweiten Formbehälters aufweist.

13. Verfahren nach einem oder mehreren der vorgenannten Ansprüche, **dadurch gekennzeichnet, dass** es den Schritt des Einführens zumindest eines dritten Materials (126) in den zweiten Behälter (21) vor dem Einführen des ersten halbfertigen Produkts (101) in den zweiten Behälter aufweist.

14. Verfahren nach einem oder mehreren der vorgenannten Ansprüche, **dadurch gekennzeichnet, dass** es den Schritt des Einführens zumindest eines vierten Materials (127) in den zweiten Behälter (21) nach dem Einführen des ersten halbfertigen Produkts (101) in den zweiten Behälter aufweist.

15. Verfahren nach einem oder mehreren der vorgenannten Ansprüche, **dadurch gekennzeichnet, dass** es die Schritte des zumindest teilweisen Bedeckens des ersten halbfertigen Produkts (101), das zumindest teilweise mit dem zweiten Material (110) bedeckt ist, durch zumindest ein fünftes Material (128) vor dem Einführen des ersten halbfertigen Produkts in den zweiten Behälter aufweist.

16. Verfahren zum Herstellen eines Sportartikels (500, 501), **dadurch gekennzeichnet, dass** es ein Verfahren nach einem oder mehreren der vorgenannten Ansprüche aufweist.

17. Verfahren nach Anspruch 16, **dadurch gekennzeichnet, dass** es sich um ein Verfahren zum Herstellen einer Bogenstruktur (500) oder einer Bogenaufbruchstruktur (501) handelt.

## Revendications

1. Procédé de fabrication d'un objet comprenant les étapes suivantes consistant à :
- insérer dans un premier contenant de formation (11) une quantité d'un premier matériau (100) comprenant des particules (200) présentant une coque (201) faite en matière thermoplastique, qui encapsule un fluide (202) qui rend lesdites particules expansibles ;
- chauffer ledit premier contenant de formation (11) à une première température (T1) de manière à provoquer une expansion des particules (200) dudit premier matériau et une liaison mécanique entre lesdites particules ;
- refroidir ledit premier contenant de formation (11), un premier produit semi-fini (101) présentant une forme géométrique au moins partiellement définie par ledit premier contenant de formation étant obtenu après le chauffage et le refroidissement dudit premier contenant de formation, ledit premier produit semi-fini présentant une structure solide au moins partiellement formée par des particules expansées et liées solidifiées (200) dudit premier matériau, les particules expansées et liées (200) dudit premier matériau présentant une capacité d'expansion résiduelle ;
comprenant en outre les étapes consistant à :
- recouvrir, au moins partiellement, ledit premier produit semi-fini avec au moins un deuxième matériau (110) ;
- insérer ledit premier produit semi-fini (101) dans un second contenant de formation (12), ledit premier produit semi-fini étant au moins partiellement recouvert dudit deuxième matériau (110) ;
- chauffer ledit second contenant de formation (12) à une seconde température (T2) supérieure à ladite première température (T1) de manière à provoquer une expansion supplémentaire des particules expansées et liées (200) dudit premier matériau en exploitant la capacité d'expansion résiduelle desdites particules expansées et liées et une expansion conséquente du volume dudit premier produit semi-fini (101) de telle sorte que ledit premier produit semi-fini presse au moins partiellement ledit deuxième matériau contre une ou plusieurs parois dudit second contenant de formation ;
- refroidir ledit second contenant de formation (12), un second produit semi-fini (102) présentant une forme géométrique au moins partiellement définie par ledit second contenant de formation étant obtenu à la suite du chauffage et du refroidissement dudit second contenant de formation, ledit second produit semi-fini présentant une structure solide au moins partiellement formée par au moins une couche solidifiée dudit deuxième matériau.

2. Procédé selon la revendication 1, **caractérisé en ce que** ledit deuxième matériau (110) est un matériau composite.

3. Procédé selon la revendication 2, **caractérisé en ce que** ledit matériau composite comprend une fibre de carbone ou une fibre de verre.

4. Procédé selon la revendication 1, **caractérisé en ce que** ledit deuxième matériau (110) est un matériau thermodurcissable.

5. Procédé selon la revendication 1, **caractérisé en ce que** ledit deuxième matériau (110) est un matériau thermoplastique.

6. Procédé selon une ou plusieurs des revendications 1 à 4, **caractérisé en ce que** ledit second contenant de formation (12) est chauffé à une seconde température (T2) de manière à provoquer un durcissement dudit deuxième matériau (110).

7. Procédé selon la revendication 5, **caractérisé en ce que** ledit second contenant de formation (12) est chauffé à une seconde température (T2) de manière à provoquer une transition vers une phase de ramollissement dudit deuxième matériau (110).

8. Procédé selon une ou plusieurs des revendications précédentes, **caractérisé en ce que** ledit second contenant de formation (12) est chauffé à une seconde température (T2) de manière à provoquer une rupture des coques (201) d'au moins une partie des particules (200) dudit premier matériau.

9. Procédé selon la revendication 8, **caractérisé en ce qu'**il comprend l'étape consistant à enlever une structure solide affaissée (101B), qui est formée après la rupture des coques (201) d'au moins une partie des particules (200) dudit premier matériau, à partir dudit second produit semi-fini (102).

10. Procédé selon la revendication 9, **caractérisé en ce qu'**il comprend l'étape consistant à enlever ladite structure solide affaissée (101B) comprend l'étape consistant à extraire ladite structure solide affaissée à travers une ouverture dédiée (110A) dudit second produit semi-fini.

11. Procédé selon une ou plusieurs des revendications précédentes, **caractérisé en ce qu'**il comprend l'étape consistant à insérer un premier produit préformé (115) dans ledit premier contenant de formation avant de chauffer ledit premier contenant de formation.

12. Procédé selon une ou plusieurs des revendications précédentes, **caractérisé en ce qu'**il comprend l'étape consistant à insérer un second produit préformé (125) dans ledit second contenant de formation avant de chauffer ledit second contenant de formation.

13. Procédé selon une ou plusieurs des revendications précédentes, **caractérisé en ce qu'**il comprend l'étape consistant à insérer au moins un troisième matériau (126) dans ledit second contenant (21) avant l'insertion dudit premier produit semi-fini (101) dans ledit second contenant.

14. Procédé selon une ou plusieurs des revendications précédentes, **caractérisé en ce qu'**il comprend l'étape consistant à insérer au moins un quatrième matériau (127) dans ledit second contenant (21) après l'insertion dudit premier produit semi-fini (101) dans ledit second contenant.

15. Procédé selon une ou plusieurs des revendications précédentes, **caractérisé en ce qu'**il comprend les étapes consistant à recouvrir au moins partiellement ledit premier produit semi-fini (101), qui est au moins partiellement recouvert dudit deuxième matériau (110), au moyen d'au moins un cinquième matériau (128) avant l'insertion dudit premier produit semi-fini dans ledit second contenant.

16. Procédé de fabrication d'un article de sport (500, 501), **caractérisé en ce qu'**il comprend un procédé selon une ou plusieurs des revendications précédentes.

17. Procédé selon la revendication 16, **caractérisé en ce qu'**il s'agit d'un procédé de fabrication d'une structure d'arc de tir à l'arc (500) ou d'une structure de poignée de tir à l'arc (501).
